# EUROPEAN PATENT APPLICATION

(11) **EP 4 811 438 A1**
(43) Date of publication of application: **23.09.2026**
(21) Application number: 24927852.4
(22) Date of filing: 08.03.2024
(51) Int. Cl.: H01M 4/131, H01M 4/137, H01M 10/058

(54) **POSITIVE ELECTRODE SHEET AND BATTERY CELL COMPRISING POSITIVE ELECTRODE SHEET, BATTERY, AND ELECTRIC DEVICE**

(71) Applicant: Contemporary Amperex Technology Co., Limited, Ningde, Fujian 352100 (CN)
(72) Inventor: ZHANG, Yu, Ningde, Fujian 352100 (CN); XUE, Qingrui, Ningde, Fujian 352100 (CN); ZHANG, Zige, Ningde, Fujian 352100 (CN); ZHAO, Zhengyuan, Ningde, Fujian 352100 (CN); ZHANG, Jinsong, Ningde, Fujian 352100 (CN)
(74) Representative: Ziebig Hengelhaupt Intellectual Property Attorneys Patentanwaltskanzlei PartGmbB
(86) International application number: PCT/CN2024/080819
(87) International publication number: WO 2025/184913

(57) **Abstract**

A positive electrode sheet and a battery cell comprising the positive electrode sheet, a battery, and an electric device. The positive electrode sheet comprises a composite current collector and a positive electrode film layer provided on at least one surface of the composite current collector. The composite current collector comprises a polymer material base layer and a metal composite layer located on at least one surface of the polymer material base layer, and the active material of the positive electrode film layer comprises the Ni element. The metal composite layer comprises a metal matrix layer and a metal oxide layer which are stacked. The resistivity of the metal oxide layer is greater than that of the metal matrix layer. The positive electrode sheet can effectively alleviate DCR deterioration and reduce battery failure.

## Description

### TECHNICAL FIELD

The present application relates to the technical field of batteries, and in particular to a positive electrode sheet, a battery cell including the positive electrode sheet, a battery, and a power consuming apparatus.

### BACKGROUND

The statement herein only provides background information related to the present application and does not necessarily constitute the prior art.

In recent years, with the wide application range of lithium-ion batteries, the lithium-ion batteries are widely used in energy storage power systems such as hydropower, thermal power, wind power and solar power stations, as well as the fields such as power tools, electric bicycles, electric motorcycles, electric vehicles, military equipment, aerospace and the like. Due to the great development of lithium-ion batteries, higher requirements have been put forward for their performance such as energy density, cycling performance, and safety performance.

A ternary material is one of positive electrode active materials of lithium-ion batteries, where "ternary" refers to transition metal elements, Ni, Co, and Mn, with a formula represented as Li[NiₓCo_{y}Mn_{(1-x-y)}]O₂, abbreviated as NCM. Currently, the ternary material has become a main factor for the energy density of the lithium-ion batteries to reach 300 Wh/kg. However, with an increase in the nickel content of the ternary material, direct current internal resistance (DCR) of a film obviously deteriorates, and a short circuit or even failure of a battery easily occurs.

### SUMMARY

To achieve the foregoing objective, in a first aspect of the present application, a positive electrode sheet that can effectively alleviate DCR deterioration and reduce battery failure, a battery cell including the positive electrode sheet, a battery, and a power consuming apparatus are provided.

In the first aspect of the present application, a positive electrode sheet is provided, including a composite current collector and a positive electrode film layer provided on at least one surface of the composite current collector. The composite current collector includes a polymer material substrate layer and a metal composite layer located on at least one surface of the polymer material substrate layer, and an active material of the positive electrode film layer contains Ni element. The metal composite layer includes a metal matrix layer and a metal oxide layer which are stacked. A resistivity of the metal oxide layer is greater than that of the metal matrix layer.

The positive electrode sheet can effectively balance the overall film resistance of the positive electrode sheet, and reduce short-circuit power of the battery, thereby effectively alleviating DCR deterioration of the battery, reducing the failure probability, and improving safety performance of the battery.

In some of the embodiments, a mole percentage of the Ni element in the active material is A, and a sheet resistance of the metal composite layer is B, A and B satisfying one of the following conditions:
(1) $80 % \leq A < 100 % , 30 mΩ \leq B \leq 45 mΩ ;$ and
(2) $33 % \leq A < 80 % , 25 mΩ \leq B \leq 35 mΩ .$

For different Ni element contents, a specific range of sheet resistance of the metal composite layer is used, so that DCR deterioration of the battery can be further alleviated and the failure probability can be reduced.

In some of the embodiments, the metal oxide layer accounts for 0.3%-2.1% by mass of the metal composite layer.

In some of the embodiments, a thickness of the metal oxide layer accounts for 0.2%-1.4% of a thickness of the metal composite layer.

In some of the embodiments, a metal element in the metal matrix layer includes one or more of aluminum, an aluminum alloy, nickel, a nickel alloy, titanium, a titanium alloy, silver, and a silver alloy.

In some of the embodiments, a metal element in the metal oxide layer includes one or more of aluminum, an aluminum alloy, nickel, a nickel alloy, titanium, a titanium alloy, silver, and a silver alloy.

In some of the embodiments, the thickness of the metal composite layer is 0.75 µm-2 µm.

In some of the embodiments, a thickness of the positive electrode film layer is 50 µm-300 µm.

In a second aspect of the present application, a battery cell is provided, including the positive electrode sheet in the first aspect.

In some of the embodiments, the battery cell includes a shell, the shell is configured to accommodate an electrode assembly, and the electrode assembly includes the positive electrode sheet.

In some of the embodiments, the shell is prismatic, the shell includes a case and at least one end cover, the case has an opening at one end only, and the end cover covers the opening; or the case has openings at both ends, and the two end covers cover the two openings respectively.

In some of the embodiments, the shell has a soft package structure, and a material of the shell includes an aluminum-plastic film.

In some of the embodiments, the shell is cylindrical, the shell includes a case and at least one end cover, the end cover covers an opening of the case, and an outer diameter of the cylinder is greater than or equal to 30 mm.

In a third aspect of the present application, a battery is provided, including the battery cell in the second aspect.

In a fourth aspect of the present application, a power consuming apparatus is provided, including the positive electrode sheet in the first aspect, the battery cell in the second aspect, or the battery in the third aspect.

### BRIEF DESCRIPTION OF THE DRAWINGS

To describe the technical solutions of the present application more clearly, the following briefly describes the accompanying drawings used in the present application. It is apparent that the accompanying drawings described below are merely some implementations of the present application. Those skilled in the art may further derive other drawings from the accompanying drawings without any creative efforts.
FIG. 1 is a schematic view of a battery cell according to an implementation of the present application;
FIG. 2 is an exploded view of the battery cell according to an implementation of the present application as shown in FIG. 1; and
FIG. 3 is a schematic view of a power consuming apparatus using a battery according to an implementation of the present application as a power source.

### Description of reference numerals:

1. battery; 11. case; 12. electrode assembly; 13. cover plate; and 2. power consuming apparatus.

To better describe and illustrate embodiments and/or examples of the present invention disclosed herein, reference can be made to one or more of the accompanying drawings. Additional details or examples used to describe the accompanying drawings are not to be considered as limiting the scope of any of the disclosed invention, the currently described embodiments and/or examples, and the currently understood best mode of the present invention.

### DETAILED DESCRIPTION

For ease of understanding of the present application, the present application will be described more completely below with reference to the accompanying drawings. The accompanying drawings illustrate preferred embodiments of the present application. However, the present application can be implemented in various forms and is not limited to the embodiments described herein. On the contrary, the embodiments are provided for the purpose of more thoroughly and completely understanding the content disclosed in the present application.

Unless otherwise defined, the meanings of all technical and scientific terms used herein are the same as those usually understood by those skilled in the art to which the present application belongs. The terms used in the specification of the present application herein are merely intended to describe objectives of specific embodiments, but are not intended to limit the present application. The term "and/or" used herein includes any and all combinations of one or more relevant items listed.

A "range" disclosed in the present application may be defined by a lower limit and an upper limit. A given range is defined by selecting a lower limit and an upper limit, and the selected lower limit and upper limit define boundaries of a specific range. A range defined in such a manner may include or exclude end values, and any end value may be independently included or excluded and may be combined in any way, that is, any lower limit may be combined with any upper limit to form a range. For example, if a range of 60-120 and a range of 80-110 are listed for a particular parameter, it is understood that a range of 60-110 and a range of 80-120 are also contemplated. In addition, if minimum range values 1 and 2 are listed and maximum range values 3, 4, and 5 are also listed, the following ranges are all contemplated: 1-3, 1-4, 1-5, 2-3, 2-4, and 2-5. In the present application, unless otherwise specified, the numerical range "a-b" refers to an abbreviated representation of any combination of real numbers between a and b, where a and b are both real numbers. For example, a numerical range "0-5" represents that all real numbers between 0 and 5 have been listed herein, and "0-5" is just an abbreviated representation of combinations of these numerical values. In addition, when a parameter is described as an integer greater than or equal to 2, it is equivalent to listing that the parameter is an integer such as 2, 3, 4, 5, 6, 7, 8, 9, 10, 11, 12, or the like. For example, when a parameter is described as an integer selected from "2-10", it is equivalent to listing integers 2, 3, 4, 5, 6, 7, 8, 9, and 10.

The terms "a plurality of", "various", and the like in the present application refer to a number greater than or equal to 2 unless otherwise limited. For example, "one or more" indicates a number of one or greater than or equal to two.

Unless otherwise specified, all implementations and optional implementations of the present application can be combined with each other to form new technical solutions.

The term "embodiment" mentioned herein means that a particular feature, structure, or characteristic described with reference to the embodiment may be included in at least one embodiment or implementation of the present application. The term appearing at different positions of the specification may not necessarily refer to the same embodiment or an independent or alternative embodiment that is mutually exclusive of other embodiments. Those skilled in the art explicitly or implicitly understand that the embodiments described herein may be combined with other embodiments. The term "implementation" mentioned herein is understood in a similar manner.

Those skilled in the art may understand that, in the methods of the implementations or embodiments, a written order of steps does not imply a strict order of execution and does not impose any limitation on an implementation process, and a specific execution order of the steps should be determined according to the functions and possible internal logic of the steps. Unless otherwise specified, all the steps in the present application can be performed in an order or randomly, preferably in the order. For example, the method including steps (a) and (b), means that the method may include steps (a) and (b) performed sequentially, or may include steps (b) and (a) performed sequentially. For example, that "the method may further include step (c)" means that step (c) may be added to the method in any order. For example, the method may include steps (a), (b), and (c), or may include steps (a), (c), and (b), or may include steps (c), (a), and (b).

In the present application, a broad-sense technical feature or technical solution described by words such as "contain", "comprise", and "include" does not exclude additional members other than the listed members unless otherwise specified, and may be considered as providing a narrow-sense feature or solution consisting of the listed members, and further providing a broad-sense feature or solution including additional members other than the listed members. For example, in a sentence "A includes a1, a2, and a3", A may further include other members, or may not include additional members unless otherwise specified, and it may be considered that a feature or solution that "A consists of a1, a2, and a3" is provided, and a feature or solution that "A not only includes a1, a2, and a3, but also includes other members" is also provided.

In the present application, unless otherwise specified, "A (such as B)" indicates that B is a non-limiting example of A, and it can be understood that A is not limited to B.

In the present application, "optionally" and "optional" means that something is not essential, that is, any one of two parallel solutions "with it" or "without it" may be selected. If "optional" appears multiple times in a technical solution, unless otherwise specified, and without contradiction or mutual constraint, each "optional" is independent of the other.

In a ternary material (Li[NiₓCo_{y}Mn_{(1-x-y)}]O₂), when the contents of the Ni, Co, and Mn elements are different, the materials have different advantages, where Ni results in a high capacity and low safety; Co results in high costs and high stability; and Mn results in high safety and low costs. The Arrhenius equation indicates that a reaction molecule can participate in a reaction only when the energy of the reaction molecule exceeds an activation energy. As the Ni content increases, an energy difference between a valence band and an Li vacancy decreases, and an activation energy required for vacancy formation decreases. In this way, more Li vacancies can be formed near the interior of a material, thereby improving the electronic conductivity of the material. However, as the Ni content further increases, the film resistance of the ternary material decreases, the current increases when internal short-circuit occurs in a battery, and correspondingly, a heat generation power increases. In addition, the increase in the Ni content further causes the ternary material to have a lower thermal stability, a lower decomposition temperature, and a shorter short-circuit failure time. Therefore, the safety design of a battery using a ternary material containing Ni, especially a Ni-rich ternary material, needs to be further improved.

A battery usually has four short-circuit modes: (1) a metal layer of a positive electrode current collector is in contact with a negative electrode active material; (2) a metal layer of a negative electrode current collector is in contact with a positive electrode active material; (3) a metal layer of a positive electrode current collector is in contact with a metal foil of a negative electrode current collector; and (4) a negative electrode active material is in contact with a positive electrode active material. The short-circuit power is the highest when the metal layer of the negative electrode current collector is in contact with the negative electrode active material. A composite current collector has a classic "sandwich" structural design, with an interlayer being a polymer material, and outer layers being metal layers. The composite current collector has characteristics of an "internal short-circuit fusing mechanism" and "no metal burr", and is considered to be capable of significantly extending a safe margin of a battery, for example, in needle puncture, pressing, and falling tests. The "internal short-circuit fusing mechanism" means that when an internal short circuit occurs in a cell, heat is generated at a short circuit point, so that the polymer material in the interlayer of the composite current collector fuses at the short circuit point, the metal layer is not supported, and the short circuit is interrupted. The characteristic of "no metal burr" means that a metal burr cannot be generated when the composite current collector is slitted. Instead, polymer material stringing may occur, and the slit end face cannot puncture the separator.

However, after the Ni content of the ternary material increases, the film resistance decreases, and the short-circuit power also increases. Consequently, the composite current collector fails to exert significant improvement effects on problems such as direct current internal resistance (DCR) deterioration, as well as short-circuit and failure of the battery, in batteries using the ternary material.

An implementation of the present application provides a positive electrode sheet, including a composite current collector and a positive electrode film layer provided on at least one surface of the composite current collector. The composite current collector includes a polymer material substrate layer and a metal composite layer located on at least one surface of the polymer material substrate layer, and an active material of the positive electrode film layer contains Ni element. The metal composite layer includes a metal matrix layer and a metal oxide layer which are stacked. A resistivity of the metal oxide layer is greater than that of the metal matrix layer.

In the positive electrode sheet, the active material containing the Ni element is used in the positive electrode film layer, the metal oxide layer is arranged based on an original metal layer (the metal matrix layer) of the composite current collector, and the resistivity of the metal oxide layer is greater than that of the metal matrix layer. Thus, the overall resistance of the metal composite layer can be increased, and the overall film resistance is adapted to the Ni element content in the active material. Therefore, the positive electrode sheet can effectively balance the overall film resistance of the positive electrode sheet, reduce short-circuit power of a battery, effectively alleviate DCR deterioration of a battery, reduce the failure probability, and improve safety performance of a battery.

It can be understood that the resistivity of the metal oxide layer and the resistivity of the metal matrix layer may be different for different types of metal elements as long as the foregoing technical solution is satisfied. In addition, when the metal element in the metal matrix layer is the same as the metal element in the metal oxide layer, the resistivity of the metal oxide layer is greater than that of the metal matrix layer.

Without limitation, the metal oxide layer in the metal composite layer may be a continuous layered structure, or may be a discretely distributed layered structure, or may be a plurality of layers, or may be a single layer, and may be alternately stacked with the metal layers when being a plurality of layers. A preparation method may include selectively oxidizing a prefabricated metal layer and forming an unoxidized metal layer and an oxidized metal oxide layer respectively. The prefabricated metal layer may be prepared by evaporation or physical vapor deposition, and an oxidant used for oxidation may be oxygen gas or ozone.

Without limitation, the active material is a ternary material. Non-limiting examples of the ternary material may include LiNi_{1/3}Co_{1/3}Mn_{1/3}O₂ (which may be abbreviated as NCM₃₃₃), LiNi_{0.5}Co_{0.2}Mn_{0.3}O₂ (which may be abbreviated as NCM₅₂₃), LiNi_{0.78}Co_{0.11}Mn_{0.11}O₂, LiNi_{0.5}Co_{0.25}Mn_{0.25}O₂ (which may be abbreviated as NCM₂₁₁), LiNi_{0.6}Co_{0.2}Mn_{0.2}O₂ (which may be abbreviated as NCM₆₂₂), LiNi_{0.8}Co_{0.1}Mn_{0.1}O₂ (which may be abbreviated as NCM₈₁₁), LiNi_{0.9}Co_{0.05}Mn_{0.05}O₂, LiNi_{0.96}Co_{0.02}Mn_{0.02}O₂, and the like.

In some of the implementations, a mole percentage of the Ni element in the active material is A, and a sheet resistance of the metal composite layer is B, A and B satisfying one of the following conditions:
(1) $80 % \leq A < 100 % , 30 mΩ \leq B \leq 45 mΩ ;$ and
(2) $33 % \leq A < 80 % , 25 mΩ \leq B \leq 35 mΩ .$

For different Ni element contents, a specific range of sheet resistance of the metal composite layer is used, so that DCR deterioration of the battery can be effectively alleviated and the failure probability can be reduced. It can be understood that, Resistance of the metal composite layer = Sheet resistance of the metal composite layer × Thickness of the metal composite layer, and the metal composite layer is usually relatively thin. Therefore, the sheet resistance of the metal composite layer may be designed to adjust the resistance of the metal composite layer. Without limitation, the sheet resistance of the metal composite layer may be tested using a sheet resistance tester.

Specifically, when 80%≤A<100%, B includes, but is not limited to, 25 mΩ, 27 mΩ, 30 mΩ, 33 mΩ, 35 mΩ, or a range between any two of the foregoing values. When 33%≤A<80%, B includes, but is not limited to, 30 mΩ, 33 mΩ, 36 mΩ, 40 mΩ, 43 mΩ, 45 mΩ, or a range between any two of the foregoing values.

In some of the implementations, the metal oxide layer accounts for 0.3%-2.1% by mass of the metal composite layer. Specifically, the metal oxide layer accounts for 0.3%, 0.6%, 0.9%, 1.2%, 1.5%, 1.8%, 2.1%, or a range between any two of the foregoing values by mass of the metal composite layer without limitation.

In some of the implementations, a thickness of the metal oxide layer accounts for 0.2%-1.4% of a thickness of the metal composite layer. Specifically, the thickness of the metal oxide layer accounts for 0.2%, 0.4%, 0.6%, 0.8%, 1.0%, 1.2%, 1.4%, or a range between any two of the foregoing values of the thickness of the metal composite layer without limitation.

Without limitation, a metal element in the metal layer and a metal element in the metal oxide layer may be the same or different, and may be a metal element conventionally used for positive electrode sheets.

In some of the implementations, the metal element in the metal matrix layer includes one or more of aluminum, an aluminum alloy, nickel, a nickel alloy, titanium, a titanium alloy, silver, and a silver alloy.

In some of the implementations, the metal element in the metal oxide layer includes one or more of aluminum, an aluminum alloy, nickel, a nickel alloy, titanium, a titanium alloy, silver, and a silver alloy.

In some of the implementations, the thickness of the metal composite layer is 0.75 µm-2 µm. Specifically, the thickness of the metal composite layer includes, but is not limited to, 0.75 µm, 1 µm, 1.2 µm, 1.4 µm, 1.6 µm, 1.8 µm, 2 µm, or a range between any two of the foregoing values.

In some of the implementations, a thickness of the positive electrode film layer is 50 µm-300 µm. Specifically, the thickness of the positive electrode film layer includes, but is not limited to, 50 µm, 100 µm, 150 µm, 200 µm, 250 µm, 300 µm, or a range between any two of the foregoing values.

An implementation of the present application provides a battery cell, including the aforementioned positive electrode sheet.

In some of the embodiments, the battery cell includes a shell, the shell is configured to accommodate an electrode assembly, and the electrode assembly includes the positive electrode sheet.

In some of the embodiments, the shell is prismatic, the shell includes a case and at least one end cover, the case has an opening at one end only, and the end cover covers the opening; or the case has openings at both ends, and the two end covers cover the two openings respectively.

In some of the embodiments, the shell has a soft package structure, and a material of the shell includes an aluminum-plastic film.

In some of the embodiments, the shell is cylindrical, the shell includes a case and at least one end cover, the end cover covers an opening of the case, and an outer diameter of the cylinder is greater than or equal to 30 mm.

An implementation of the present application provides a battery, including the aforementioned battery cell.

An implementation of the present application provides a power consuming apparatus, including the aforementioned positive electrode sheet, the aforementioned battery cell, or the aforementioned battery.

The battery and the power consuming apparatus of the present application are described below with reference to the accompanying drawings properly.

Generally, the battery cell includes a positive electrode sheet, a negative electrode sheet, an electrolyte, and a separator. During charge and discharge processes of a battery, active ions are intercalated and deintercalated back and forth between the positive electrode sheet and the negative electrode sheet. The electrolyte functions to conduct ions between the positive electrode sheet and the negative electrode sheet. The separator is arranged between the positive electrode sheet and the negative electrode sheet to mainly play a role in preventing a short circuit between a positive electrode and a negative electrode while allowing ions to pass through.

The positive electrode sheet is as described above.

As a non-limiting example, a composite current collector has two opposite surfaces in a thickness direction thereof, and a positive electrode film layer is provided on either or both of the two opposite surfaces of the composite current collector.

In some implementations, the composite current collector may include a polymer material substrate layer and a metal layer formed on at least one surface of the polymer material substrate layer. The composite current collector may be obtained by forming a metal material on a polymer material substrate. In the composite current collector, non-limiting examples of the metal material may include one or more of aluminum, an aluminum alloy, nickel, a nickel alloy, titanium, a titanium alloy, silver, a silver alloy, and the like. In the composite current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some of the embodiments, besides the ternary material, the positive electrode film layer may further include another conventional positive electrode active material. As a non-limiting example, the other conventional positive electrode active material may include one or more of the following materials: lithium-containing phosphate with an olivine structure, lithium transition metal oxide, and the respective modified compounds thereof. However, the present application is not limited to the materials and may also use other conventional materials suitable for use as positive electrode active materials for batteries. The positive electrode active materials may be used singly, or two or more thereof may be used in combination. Examples of the lithium transition metal oxide may include, but are not limited to, one or more of lithium cobalt oxide (e.g., LiCoO₂), lithium nickel oxide, lithium manganese oxide, lithium nickel cobalt oxide, lithium manganese cobalt oxide, lithium nickel manganese oxide, lithium nickel cobalt aluminum oxide, and modified compounds thereof. Non-limiting examples of the lithium-containing phosphate with an olivine structure may include, but are not limited to, one or more of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. A non-limiting example of the lithium cobalt oxide may include LiCoO₂. A non-limiting example of the lithium nickel oxide may include LiNiO₂. A non-limiting example of the lithium manganese oxide may include LiMnO₂, LiMn₂O₄, and the like. A non-limiting example of the lithium nickel cobalt aluminum oxide may include LiNi_{0.8}Co_{0.15}Al_{0.05}O₂.

In some of the embodiments, the positive electrode film layer may further optionally include a binder. Non-limiting examples of the binder may include one or more of polyvinylidene difluoride (PVDF), polytetrafluoroethylene (PTFE), vinylidene difluoride-tetrafluoroethylene-propylene terpolymer, vinylidene difluoride-hexafluoropropylene-tetrafluoroethylene terpolymer, tetrafluoroethylene-hexafluoropropylene copolymer, and fluorine-containing acrylate resin.

In some of the embodiments, the positive electrode film layer may further optionally include a conductive agent. Non-limiting examples of the conductive agent may include one or more of superconducting carbon, acetylene black, carbon black, Ketjen black, carbon dots, carbon nanotubes, graphene, and carbon nanofibers.

In some of the embodiments, the positive electrode sheet may be prepared by the following method: dispersing the aforementioned components for preparing the positive electrode sheet, for example, the ternary material, the conductive agent, the binder, and any other components in a solvent to form a positive electrode slurry; and coating the positive electrode slurry to at least one side surface of the composite current collector, followed by oven drying, cold pressing, and other procedures, to obtain the positive electrode sheet. The solvent may be selected from, but is not limited to, any one in the foregoing implementations, for example, N-methylpyrrolidone (NMP). The surface of the composite current collector coated with the positive electrode slurry may be either one surface of the positive electrode current collector, or both surfaces of the composite electrode current collector. The surface of the composite current collector coated with the positive electrode slurry may be either one surface of the composite electrode current collector, or both surfaces of the composite electrode current collector. The solid content of the positive electrode slurry may be 40 wt%-80 wt%. The viscosity of the positive electrode slurry at room temperature may be adjusted to 5,000 mPa·s-25,000 mPa·s. When the positive electrode slurry is coated, the unit areal density of the coating based on a dry weight (on a solvent-free basis) may be 15 mg/cm²-35 mg/cm². The compaction density of the positive electrode sheet may be 3.0 g/cm³-3.6 g/cm³, optionally, 3.3 g/cm³-3.5 g/cm³.

A negative electrode sheet includes a negative electrode current collector and a negative electrode active material layer provided on at least one surface of the negative electrode current collector. The negative electrode active material layer includes a negative electrode active material.

As a non-limiting example, the negative electrode current collector has two opposite surfaces in a thickness direction thereof, and the negative electrode active material layer is provided on either or both of the two opposite surfaces of the negative electrode current collector.

In some of the embodiments, the negative electrode current collector may use a metal foil or a composite current collector. For example, a copper foil may be used as the metal foil. The composite current collector may include a polymer material substrate layer and a metal layer formed on at least one surface of a polymer material substrate. The composite current collector may be obtained by forming a metal material on a polymer material substrate. In the negative electrode current collector, non-limiting examples of the metal material may include one or more of copper, a copper alloy, nickel, a nickel alloy, titanium, a titanium alloy, silver, a silver alloy, and the like. In the negative electrode current collector, non-limiting examples of the polymer material substrate may include one or more of polypropylene (PP), polyethylene terephthalate (PET), polybutylene terephthalate (PBT), polystyrene (PS), polyethylene (PE), and other substrates.

In some of the embodiments, the negative electrode active material may use negative electrode active materials for batteries well known in the art. Non-limiting examples of the negative electrode active material may include one or more of the following materials: artificial graphite, natural graphite, soft carbon, hard carbon, silicon-based material, tin-based material, lithium titanate, and the like. The silicon-based material may include one or more of elemental silicon, a silicon-oxygen compound, a silicon-carbon composite, a silicon-nitrogen composite, and a silicon alloy. The tin-based material may include one or more of elemental tin, a tin-oxygen compound, and a tin alloy. However, the present application is not limited to these materials and may also use other conventional materials suitable for use as negative electrode active materials for batteries. The negative electrode active materials may be used singly, or two or more thereof may be used in combination.

In some of the embodiments, the negative electrode active material layer may further optionally include a binder. The binder may include one or more of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS).

In some of the embodiments, the negative electrode active material layer may further optionally include a conductive agent. The conductive agent may include one or more of superconducting carbon, acetylene black, carbon black, Ketjen black, carbon dots, carbon nanotubes, graphene, and carbon nanofibers.

In some of the embodiments, the negative electrode active material layer further optionally includes other auxiliary agents, such as a thickener (e.g., sodium carboxymethyl cellulose (CMC-Na)).

In some of the embodiments, the negative electrode sheet may be prepared by the following method: dispersing the aforementioned components for preparing the negative electrode sheet, for example, the negative electrode active material, the conductive agent, the binder, and any other components, in a solvent (e.g., deionized water as a non-limiting example) to form a negative electrode slurry; and coating the negative electrode slurry to at least one side surface of the negative electrode current collector, followed by oven drying, cold pressing, and other procedures, to obtain the negative electrode sheet. The negative electrode slurry may be coated onto one or two surfaces of the negative electrode current collector. The solid content of the negative electrode slurry may be 40 wt%-60 wt%. The viscosity of the negative electrode slurry at room temperature may be adjusted to 2,000 mPa·s-10,000 mPa·s. When the negative electrode slurry is coated, the unit areal density of the coating based on a dry weight (on a solvent-free basis) may be 75 g/m²-220 g/m². The compaction density of the negative electrode sheet may be 1.0 g/cm³-1.8 g/cm³.

The electrolyte functions to conduct ions between the positive electrode sheet and the negative electrode sheet. The type of the electrolyte is not specifically limited in the present application and may be selected according to demands. For example, the electrolyte may be in a liquid, gel, or all solid state.

In some embodiments, the electrolyte is an electrolyte solution. The electrolyte solution includes an electrolyte salt and a solvent.

In some of the embodiments, the electrolyte salt may include one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluorophosphate (LiPO₂F₂), lithium difluoro(oxalato)borate (LiDFOB), lithium bis(oxalato)borate (LiBOB), lithium difluoro(oxalato)phosphate (LiDFOP), and lithium tetrafluoro(oxalato)phosphate (LiTFOP).

In some of the embodiments, the solvent may include one or more of ethylene carbonate (EC, 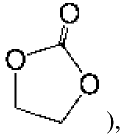 propylene carbonate (PC, 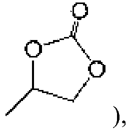 ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate 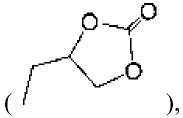 fluoroethylene carbonate (FEC), methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, methyl ethyl sulfone, and diethyl sulfone.

In some of the embodiments, the electrolyte solution may further optionally include additives. For example, the additives may include a negative electrode film-forming additive and a positive electrode film-forming additive, and may further include an additive capable of improving some properties of batteries, for example, an additive capable of improving the overcharge property of batteries, an additive capable of improving the high-temperature or low-temperature property of batteries, and the like.

In some implementations, the additives in the electrolyte may include, but are not limited to, one or more of fluoroethylene carbonate (FEC), difluoroethylene carbonate (DFEC), trifluoromethyl ethylene carbonate (TFPC), and the like.

In some of the embodiments, the battery cell further includes the separator. The type of the separator is not specifically limited in the present application, and any well-known porous-structured separator having good chemical stability and mechanical stability may be used.

In some of the embodiments, the material of the separator may include one or more of glass fibers, non-woven cloth, polyethylene, polypropylene, and polyvinylidene fluoride. The separator may be either a single-layer film or a multi-layer composite film without special limitations. When the separator is a multi-layer composite film, the materials of the layers may be the same or different without special limitations.

In some implementations, a thickness of the separator is 6 µm-40 µm, optionally, 12 µm-20 µm.

In some of the embodiments, the positive electrode sheet, the negative electrode sheet, and the separator may form an electrode assembly by a winding process or a laminating process.

In some of the embodiments, the battery cell may include an outer package. The outer package may be configured to encapsulate the aforementioned electrode assembly and electrolyte.

In some of the embodiments, the outer package of the battery cell may be a hard shell, such as a hard plastic shell, an aluminum shell, or a steel shell. The outer package of the battery cell may also be a soft package, such as a pouch-type soft package. The material of the soft package may be plastic, and further, non-limiting examples of the plastic may include one or more of polypropylene, polybutylene terephthalate, polybutylene succinate, and the like.

The battery includes at least one battery cell. The battery may include one or more battery cells.

In the present application, unless otherwise specified, the "battery cell" refers to a basic unit capable of achieving interconversion between chemical energy and electric energy, and further, generally includes at least a positive electrode sheet, a negative electrode sheet, and an electrolyte. During charge and discharge processes of a battery, active ions are intercalated and deintercalated back and forth between the positive electrode sheet and the negative electrode sheet. The electrolyte functions to conduct active ions between the positive electrode sheet and the negative electrode sheet.

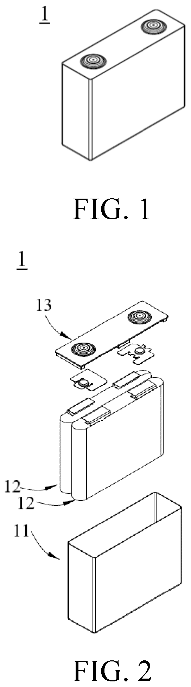

The shape of the battery cell is not particularly limited in the present application, and may be a cylindrical, prismatic, or any other shape. For example, FIG. 1 shows a prismatic battery cell 1 as an example.

In some of the embodiments, referring to FIG. 2, the outer package may include a case 11 and a cover plate 13. The case 11 may include a bottom plate and side plates connected to the bottom plate, and the bottom plate and the side plates form an accommodating cavity. The case 11 has an opening in communication with the accommodating cavity, and the cover plate 13 can cover the opening to close the accommodating cavity. The positive electrode sheet, the negative electrode sheet, and the separator may form an electrode assembly 12 through a winding process or a laminating process. The electrode assembly 12 is encapsulated in the accommodating cavity. The electrolyte solution impregnates the electrode assembly 12. The battery cell 1 may include one or more electrode assemblies 12, which may be selected by those skilled in the art according to an actual requirement.

The battery may be a battery module or a battery pack.

The battery module includes at least one battery cell. The battery module may include one or more battery cells, and those skilled in the art may select an appropriate number according to the use and capacity of the battery module.

In the battery module, a plurality of battery cells may be sequentially arranged in a length direction of the battery module. Certainly, the plurality of battery cells may also be arranged in any other manner. Further, the plurality of battery cells may be fixed by fasteners.

Optionally, the battery module may further include a shell having an accommodating space, in which the plurality of battery cells are accommodated.

In some of the embodiments, the battery module may also be assembled into a battery pack, the battery pack may include one or more battery modules, and those skilled in the art may select an appropriate number according to the use and capacity of the battery pack.

The battery pack may include a battery box and a plurality of battery modules arranged in the battery box. The battery box includes an upper box and a lower box, and the upper box can cover the lower box to form a closed space for accommodating the battery modules. The plurality of battery modules may be arranged in any manner in the battery box.

In addition, the present application further provides a power consuming apparatus. The power consuming apparatus includes the battery provided by the present application. The battery may be used as a power source of the power consuming apparatus, or may be used as an energy storage unit of the power consuming apparatus. The power consuming apparatus may include, but is not limited to, a mobile device, an electric vehicle, an electric train, a ship, a satellite, an energy storage system, or the like. The mobile device may be, for example, a mobile phone or a laptop; and the electric vehicle may be, but is not limited to, for example, an all-electric vehicle, a hybrid electric vehicle, a plug-in hybrid electric vehicle, an electric bicycle, an electric scooter, an electric golf cart, or an electric truck.

For the power consuming apparatus, the battery can be selected according to the requirements during use.

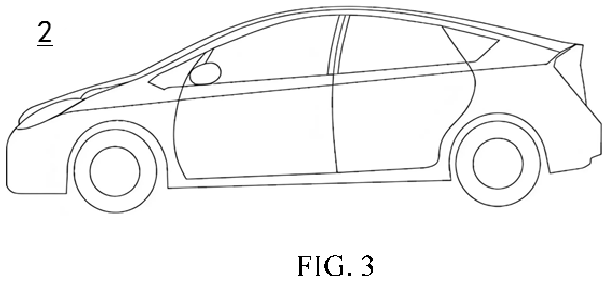

FIG. 3 shows a power consuming apparatus 2 as an example. The power consuming apparatus is an all-electric vehicle, a hybrid electric vehicle, a plug-in hybrid electric vehicle, or the like. To meet the requirements of the power consuming apparatus for high power and high energy density of batteries, a battery pack or a battery module may be used.

As another example, the apparatus may be a mobile phone, a tablet computer, a notebook computer, or the like. The apparatus is generally required to be light and thin and may use the battery as a power supply.

To make the technical problems to be solved, the technical solutions, and the beneficial effects of the present application clearer, the present application is further described below in detail with reference to the embodiments and the accompanying drawings. Apparently, the described embodiments are only some embodiments rather than all the embodiments of the present application. The following descriptions on at least one exemplary embodiment are actually merely illustrative, and are not intended to limit the present application and use thereof. All other embodiments obtained by those of ordinary skill in the art based on the embodiments in the present application without creative efforts shall fall within the protection scope of the present application.

Where no specific technologies or conditions are indicated in the embodiments, the technologies or conditions described in literatures in the art or product instructions are followed. Reagents or instruments without manufacturers indicated are all conventional products obtained through market purchase.

### Embodiment 1

### 1) Preparation of positive electrode sheet

### 1.1 Preparation of composite current collector (having a thickness of 10 µm):

Using a physical vapor deposition (PVD) method, under vacuum conditions, an aluminum metal wire with a purity≥99.99% was melted in a high-temperature evaporation boat to a saturated vapor state. Then, the saturated vapor was deposited on two surfaces of an 8 µm PET polymer substrate film to form aluminum metal layers. The aluminum metal layer was oxidized in an ozone atmosphere at 120°C for 10 s, to form a metal composite layer (having a thickness of 1 µm) including a metal oxide layer (aluminum oxide) with a content of 0.3%, to obtain a composite current collector.

### 1.2 Preparation of positive electrode sheet

A ternary material (LiNi_{1/3}Co_{1/3}Mn_{1/3}O₂), conductive carbon black SP, and a binder PVDF in a weight ratio of 98:1:1 were dispersed in a solvent NMP and mixed uniformly to obtain a positive electrode slurry. The positive electrode slurry was uniformly coated onto surfaces of both sides of the composite current collector, and after being oven-dried and cold-pressed, a positive electrode film layer having a thickness of 100 µm was formed, to obtain a positive electrode sheet. An areal coating weight of the two sides was 0.27 g/1540.25 mm², and the compaction density was 3.5 g/cm³.

### 2) Preparation of negative electrode sheet

A negative electrode active material graphite, a thickener sodium carboxymethyl cellulose, a binder styrene butadiene rubber, and a conductive agent acetylene black in a mass ratio of 97:1:1:1 were mixed, and deionized water was added to the mixture to obtain a negative electrode slurry using a vacuum mixer. The negative electrode slurry was uniformly coated onto surfaces of both sides of a copper foil. After being air-dried at room temperature, the copper foil was transferred to and dried in an oven at 120°C for 1 h, and then was cold-pressed and slitted to obtain a negative electrode sheet. An areal coating weight of the two sides was 0.17 g/1540.25 mm², and the compaction density was 1.6 g/cm³.

### 3) Separator

A PP/PE/PP separator having a thickness of 12 µm was used.

### 4) Preparation of electrolyte solution

An organic solvent was a mixed solution containing ethylene carbonate (EC) and ethyl methyl carbonate (EMC), where the volume ratio of the EC to the EMC was 3:7. In an argon atmosphere glove box with a water content<10 ppm, fully dried lithium salt LiPF6 was dissolved in the organic solvent and mixed uniformly to obtain an electrolyte solution. The concentration of the lithium salt was 1 mol/L.

### 5) Preparation of battery

The positive electrode sheet, the separator, and the negative electrode sheet were sequentially stacked to locate the separator between the positive electrode sheet and the negative electrode sheet to achieve a separation effect, and then, were wound into a prismatic bare battery cell to be encapsulated into an aluminum-plastic film. Then, the battery cell was dried at 80°C for water removal, and 10 g of a corresponding nonaqueous electrolyte solution was injected and sealed. After procedures of standing, hot and cold pressing, chemical formation, fixturing, capacity grading, and the like, a 180 Ah hard shell lithium-ion battery was obtained.

Preparation methods of lithium-ion batteries of Embodiments 2-12 were similar to that of the lithium-ion battery of Embodiment 1, except that ternary materials with different Ni contents were used or the sheet resistance of the metal composite layer was adjusted by adjusting the content of the metal oxide layer.

A preparation method of a lithium-ion battery of Embodiment 13 was similar to that of the lithium-ion battery of Embodiment 1, except that a metal composite layer having a different thickness was used.

A preparation method of a lithium-ion battery of Embodiment 14 was similar to that of the lithium-ion battery of Embodiment 1, except that a positive electrode film layer having a different thickness was used.

A preparation method of a lithium-ion battery of Embodiment 15 was similar to that of the lithium-ion battery of Embodiment 10, except that a metal composite layer having a different thickness was used.

A preparation method of a lithium-ion battery of Embodiment 16 was similar to that of the lithium-ion battery of Embodiment 10, except that a positive electrode film layer having a different thickness was used.

A preparation method of a lithium-ion battery of Comparative Example 1 (D1) was similar to that of the lithium-ion battery of Embodiment 1, except that no metal oxide layer was arranged, that is, the step of oxidization in step 1.1 was not performed.

Parameters of Embodiments 1-16 and Comparative Example 1 are specifically shown in Table 1 below.

**Table 1**

| Embodiment | Ternary material | Mole percentage of Ni in ternary material (A) | Metal composite layer Sheet resistance (B) | Content of metal oxide layer | Thickness of metal composite layer (µm) | Thickness of positive electrode film layer (µm) |
|---|---|---|---|---|---|---|
| 1 | LiNi_{1/3}Co_{1/3}Mn_{1/3}O₂ | 33% | 27 mΩ | 0.3% | 1 | 100 |
| 2 | LiNi_{1/3}Co_{1/3}Mn_{1/3}O₂ | 33% | 33 mΩ | 1.2% | 1 | 100 |
| 3 | LiNi_{0.5}Co_{0.2}Mn_{0.3}O₂ | 50% | 27 mΩ | 0.3% | 1 | 100 |
| 4 | LiNi_{0.5}Co_{0.2}Mn_{0.3}O₂ | 50% | 33 mΩ | 1.2% | 1 | 100 |
| 5 | LiNi_{0.78}Co_{0.11}Mn_{0.11}O₂ | 78% | 27 mΩ | 0.3% | 1 | 100 |
| 6 | LiNi_{0.78}Co_{0.11}Mn_{0.11}O₂ | 78% | 33 mΩ | 1.2% | 1 | 100 |
| 7 | LiNi_{0.8}Co_{0.1}Mn_{0.1}O₂ | 80% | 33 mΩ | 1.2% | 1 | 100 |
| 8 | LiNi_{0.8}Co_{0.1}Mn_{0.1}O₂ | 80% | 45 mΩ | 2.1% | 1 | 100 |
| 9 | LiNi_{0.9}Co_{0.05}Mn_{0.05}O₂ | 90% | 33 mΩ | 1.2% | 1 | 100 |
| 10 | LiNi_{0.9}Co_{0.05}Mn_{0.05}O₂ | 90% | 45 mΩ | 2.1% | 1 | 100 |
| 11 | LiNi_{0.96}Co_{0.02}Mn_{0.02}O₂ | 96% | 33 mΩ | 1.2% | 1 | 100 |
| 12 | LiNi_{0.96}Co_{0.02}Mn_{0.02}O₂ | 96% | 45 mΩ | 2.1% | 1 | 100 |
| 13 | LiNi_{1/3}Co_{1/3}Mn_{1/3}O₂ | 33% | 27 mΩ | 0.3% | 2 | 100 |
| 14 | LiNi_{1/3}Co_{1/3}Mn_{1/3}O₂ | 33% | 27 mΩ | 0.3% | 1 | 200 |
| 15 | LiNi_{0.9}Co_{0.05}Mn_{0.05}O₂ | 90% | 45 mΩ | 2.1% | 2 | 100 |
| 16 | LiNi_{0.9}Co_{0.05}Mn_{0.05}O₂ | 90% | 45 mΩ | 2.1% | 1 | 200 |
| D1 | LiNi_{1/3}Co_{1/3}Mn_{1/3}O₂ | 33% | / | 0% | 1 | 100 |

| | | | | | | |
|---|---|---|---|---|---|---|
| Note: The content of the metal oxide layer refers to the percentage of the metal oxide layer in the metal composite layer by mass. | | | | | | |

### Test Example

### (1) DCR test

A prepared lithium-ion battery was tested for a 10 s direct current internal resistance (DCR) at 50% SOC, at a rate of 3.6 C and at 25°C.

### (2) Failure probability test:

A separator breakage defect was intentionally introduced into a prepared lithium-ion battery. Namely, after a shell of a battery cell was broken in a fully charged state (4.25 V or 100% SOC), a bare battery cell was taken out and a 20×20 mm² hole was cut through the separator at the central position of a large surface, and the bare battery cell was compressed under an areal pressure of 5 Mpa in a room temperature environment of 25°C for 1 h to observe whether the battery cell failed. The test was repeated 10 times and the number of failure times was recorded.

The test results of the embodiments and comparative example are shown in Table 2.

**Table 2**

| | DCR test | Failure probability |
|---|---|---|
| Embodiment | 25°C / 50% SOC | 20×20 mm² |
| 1 | 0.814 | 0/10 |
| 2 | 0.854 | 0/10 |
| 3 | 0.742 | 0/10 |
| 4 | 0.758 | 0/10 |
| 5 | 0.639 | 0/10 |
| 6 | 0.668 | 0/10 |
| 7 | 0.604 | 0/10 |
| 8 | 0.636 | 0/10 |
| 9 | 0.499 | 1/10 |
| 10 | 0.511 | 0/10 |
| 11 | 0.472 | 2/10 |
| 12 | 0.490 | 1/10 |
| 13 | 0.803 | 0/10 |
| 14 | 0.856 | 0/10 |
| 15 | 0.503 | 0/10 |
| 16 | 0.576 | 0/10 |
| D1 | 0.778 | 3/10 |

| | | |
|---|---|---|
| Note: "0/10" means that 0 failure appears in 10 failure tests, and the rest can be deduced by analogy. | | |

It can be learned that compared with Comparative Example 1, in Embodiments 1 and 2 (the ternary material was the same as Comparative Example1) where the metal oxide layer was arranged, direct current internal resistance (DCR) deterioration can be alleviated, and the failure probability can be significantly reduced.

Further, Embodiments 3-12 indicate that for the ternary materials with different Ni contents, direct current internal resistance (DCR) deterioration can be desirably alleviated and the failure probability can be reduced by properly controlling the sheet resistance of the metal composite layer. Embodiments 13-16 indicate that when the sheet resistance of the metal composite layer is properly controlled, for the ternary materials with different ranges of Ni contents, the metal composite layer with a different thickness and the positive electrode film layer with a different thickness can be designed to desirably alleviate direct current internal resistance (DCR) deterioration and reduce the failure probability.

The technical features in the foregoing embodiments may be randomly combined. For concise description, not all possible combinations of the technical features in the embodiments are described. However, the combinations of the technical features are considered as falling within the scope described in this specification provided that no contradiction exists in the combinations.

The foregoing embodiments only describe several implementations of the present application in a specific and detailed manner, but cannot be construed as limitations to the scope of the invention patent. It should be noted that for those of ordinary skill in the art, several transformations and improvements can be made without departing from the idea of the present application, and the transformations and improvements belong to the protection scope of the present application. Therefore, the protection scope of the present application for patent shall be subject to the appended claims.

## Claims

1. A positive electrode sheet, comprising a composite current collector and a positive electrode film layer provided on at least one surface of the composite current collector, wherein the composite current collector comprises a polymer material substrate layer and a metal composite layer located on at least one surface of the polymer material substrate layer, and an active material of the positive electrode film layer contains Ni element; and
the metal composite layer comprises a metal matrix layer and a metal oxide layer which are stacked, and a resistivity of the metal oxide layer is greater than that of the metal matrix layer.

2. The positive electrode sheet according to claim 1, wherein a mole percentage of the Ni element in the active material is A, and a sheet resistance of the metal composite layer is B, A and B satisfying one of the following conditions:
(1) $80 % \leq A < 100 % , 30 mΩ \leq B \leq 45 mΩ ;$ and
(2) $33 % \leq A < 80 % , 25 mΩ \leq B \leq 35 mΩ .$

3. The positive electrode sheet according to claim 1 or 2, wherein the metal oxide layer accounts for 0.3%-2.1% by mass of the metal composite layer.

4. The positive electrode sheet according to any one of claims 1-3, wherein a thickness of the metal oxide layer accounts for 0.2%-1.4% of a thickness of the metal composite layer.

5. The positive electrode sheet according to any one of claims 1-4, wherein a metal element in the metal matrix layer comprises one or more of aluminum, an aluminum alloy, nickel, a nickel alloy, titanium, a titanium alloy, silver, and a silver alloy.

6. The positive electrode sheet according to any one of claims 1-5, wherein a metal element in the metal oxide layer comprises one or more of aluminum, an aluminum alloy, nickel, a nickel alloy, titanium, a titanium alloy, silver, and a silver alloy.

7. The positive electrode sheet according to any one of claims 1-6, wherein the thickness of the metal composite layer is 0.75 µm-2 µm.

8. The positive electrode sheet according to any one of claims 1-7, wherein a thickness of the positive electrode film layer is 50 µm-300 µm.

9. A battery cell, comprising the positive electrode sheet according to any one of claims 1-8.

10. The battery cell according to claim 9, wherein the battery cell comprises a shell, the shell is configured to accommodate an electrode assembly, and the electrode assembly comprises the positive electrode sheet.

11. The battery cell according to claim 10, wherein the shell is prismatic, the shell comprises a case and at least one end cover, the case has an opening at one end only, and the end cover covers the opening; or the case has openings at both ends, and the two end covers cover the two openings respectively.

12. The battery cell according to claim 10 or 11, wherein the shell has a soft package structure, and a material of the shell comprises an aluminum-plastic film.

13. The battery cell according to claim 10, wherein the shell is cylindrical, the shell comprises a case and at least one end cover, the end cover covers an opening of the case, and an outer diameter of the cylinder is greater than or equal to 30 mm.

14. A battery, comprising the battery cell according to any one of claims 9-13.

15. A power consuming apparatus, comprising the electrode sheet according to any one of claims 1-8, the battery cell according to any one of claims 9-13, or the battery according to claim 14.
